# EUROPÄISCHE PATENTANMELDUNG

(11) **EP 4 671 163 A1**
(43) Veröffentlichungstag der Anmeldung: **31.12.2025**
(21) Anmeldenummer: 25184498.1
(22) Anmeldetag: 23.06.2025
(51) Int. Cl.: B65G 43/00, B65G 45/02, B65G 45/22

(54) **VORRICHTUNG ZUM FÖRDERN VON BEHÄLTERN UND ZUGEHÖRIGES BETRIEBSVERFAHREN**

(30) Priorität: 25.06.2024 DE 102024117932
(71) Anmelder: KRONES AG, 93073 Neutraubling (DE)
(72) Erfinder: LEE, Kyoung-Won, 93073 Neutraubling (DE); GANDORFER, Michael, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Fördern von Behältern (12). Die Vorrichtung (10) weist einen Behälterförderer (16) mit einem umlaufenden Förderelement (18) und eine Sensoreinrichtung (24), die dazu ausgebildet ist, mindestens eines zu erfassen von einer Verschmutzung des umlaufenden Förderelements (18), einer Verschmutzung der Behälter (12) und einem Reibkennwert des umlaufenden Förderelements (18), auf. Die Vorrichtung (10) weist ferner eine Benutzerschnittstelle (60) und/oder eine Reinigungseinrichtung (26) zum Reinigen des umlaufenden Förderelements (18) auf. Die Vorrichtung (10) weist ferner eine Verarbeitungseinrichtung (62) auf, die dazu konfiguriert ist, abhängig von einer Signalausgabe der Sensoreinrichtung (24) die Benutzerschnittstelle (60) zum Ausgeben einer Aufforderung zum Reinigen des umlaufenden Förderelements (18) zu betreiben und/oder die Reinigungseinrichtung (26) zum Reinigen des umlaufenden Förderelements (18) zu betreiben.

## Beschreibung

### Technisches Gebiet

Die Erfindung betrifft eine Vorrichtung zum Fördern von Behältern. Die Erfindung betrifft ferner ein Verfahren zum Betreiben einer Vorrichtung zum Fördern von Behältern

### Technischer Hintergrund

Behälter und Behältergebinde können in Behälterbehandlungsanlagen durch die einzelnen Anlagenteile transportiert und bspw. gereinigt, gefüllt, verschlossen, geprüft, etikettiert oder bedruckt werden. Zum Transport der Behälter und Behältergebinde können bspw. Stückgutförderer mit umlaufendem Förderelement eingesetzt werden. Das Förderelement dient als Endlos-Tragelement, das die zu fördernden Behälter oder Behältergebinde bzw. allgemein Objekte trägt. Typischerweise kann das Förderelement nach oben und unten (und ggf. auch seitlich) gebogen werden, um dem gewünschten Verlauf des Förderers mit Umlenkungen bspw. am Übergang von Obertrum und Untertrum oder durch Kurven zu folgen.

Um eine gewünschte Reibung zwischen den zu fördernden Behältern und dem Förderelement einzustellen, können die Förderelemente geschmiert werden. Zum Schmieren von Förderern sind klassische Bandschmieranlagen mit voreingestellten, zyklischen Dosierintervallen gängige Praxis.

Die WO 2015/165858 A1 betrifft eine Vorrichtung zum Ermitteln eines Reibwiderstands einer zum Transport von Behältern ausgebildeten Transportbandoberfläche. Um eine Vorrichtung bereitzustellen, mit der der Reibwiderstand einer Transportbandoberfläche besonders einfach und genau bestimmt werden kann, ist eine Sensoreinheit vorgesehen, die einen in einem Schutzgehäuse angeordneten Sensorkörper aufweist. Die Sensoreinheit ist zum Anordnen in einem Transportstrom von auf dem Transportband transportierten Behältern und zur Ermittlung des Reibwiderstands im Betrieb des Transportbandes ausgebildet.

Die im Markt gängigen Bandschmieranlagen reagieren nicht auf äußere Einflussgrößen, die den Reibwert beeinflussen können. Somit kann es zu ungewünschten Abweichungen zum erforderlichen Reibwert kommen.

Der Erfindung liegt die Aufgabe zu Grunde, eine verbesserte Technik zum Gewährleisten eines optimalen Betriebs einer Vorrichtung zum Fördern von Behältern zu schaffen. Vorzugsweise soll die Technik insbesondere Nachteile bekannter Bandschmieranlagen überwinden.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Vorrichtung zum Fördern von Behältern für eine Behälterbehandlungsanlage (z. B. Getränkeabfüllanlage). Die Vorrichtung weist einen Behälterförderer mit einem umlaufenden Förderelement (z. B. ein Förderband, eine Mattenkette, ein Scharnierband, eine Förderkette oder ein Plattenband) zum Fördern der Behälter auf. Die Vorrichtung weist ferner eine Sensoreinrichtung auf, die dazu ausgebildet ist, mindestens eines zu erfassen von einer Verschmutzung des umlaufenden Förderelements, einer Verschmutzung der Behälter und einem Reibkennwert (z. B. Reibzahl (Reibungskoeffizienten), Haftreibungszahl und/oder Gleitreibungszahl) des umlaufenden Förderelements (z. B. zu einem Referenzkörper/Reibkörper oder zu den Behältern). Die Vorrichtung weist ferner mindestens eines von einer Benutzerschnittstelle und einer (z. B. stationären) Reinigungseinrichtung zum Reinigen des umlaufenden Förderelements auf. Die Vorrichtung weist ferner eine Verarbeitungseinrichtung auf, die dazu konfiguriert ist, abhängig von einer Signalausgabe der Sensoreinrichtung bezüglich der erfassten Verschmutzung (z. B. des umlaufenden Förderelements und/oder der Behälter) und/oder des erfassten Reibkennwerts die Benutzerschnittstelle zum Ausgeben einer Aufforderung zum Reinigen des umlaufenden Förderelements zu betreiben und/oder die Reinigungseinrichtung zum Reinigen des umlaufenden Förderelements zu betreiben.

Vorteilhaft ermöglicht die Vorrichtung, dass das Förderelement gereinigt wird, wenn eine Verschmutzung des Förderelements oder der Behälter erfasst wird oder wenn ein Reibkennwert erfasst wird, der größer als ein Soll-Reibkennwert ist. Vorteilhaft kann damit eine Verbesserung des Betriebs des Behälterförderers erreicht werden, wenn bspw. die Möglichkeiten einer Schmiereinrichtung zum Schmieren des umlaufenden Förderelements bereits ausgereizt sind und nicht zum gewünschten Erfolg (Reibkennwert) geführt haben. Vorteilhaft lässt sich damit bspw. auch ein übermäßiges (erfolgloses) Schmieren des Förderelements verhindern, wodurch sich Schmierstoff einsparen lässt und der Behälterförderer nachhaltiger betrieben werden kann.

In einem Ausführungsbeispiel weist die Sensoreinrichtung mindestens einen (z. B. berührungslosen oder berührenden) Sensor zum Erfassen der Verschmutzung des umlaufenden Förderelements und/oder der Verschmutzung der Behälter und mindestens einen (z. B. berührungslosen oder berührenden) weiteren Sensor zum Erfassen des Reibkennwerts auf. Alternativ kann die Sensoreinrichtung beispielsweise mindestens einen (z. B. optischen) Sensor aufweisen, der dazu ausgebildet ist, sowohl die Verschmutzung des umlaufenden Förderelements und/oder die Verschmutzung der Behälter als auch den Reibkennwert zu erfassen.

In einem weiteren Ausführungsbeispiel weist die Sensoreinrichtung einen Biofilmsensor zum Erfassen der Verschmutzung des umlaufenden Förderelements und/oder der Verschmutzung der Behälter auf. Vorteilhaft kann auf diese Weise die Verschmutzung direkt und besonders zuverlässig erfasst werden.

In einer Ausführungsform kann die Sensoreinrichtung einen Reibkörper und einen damit verbundenen Kraftaufnehmer zum Erfassen des Reibkennwerts aufweisen, wobei der Reibkörper an einer Behälterkontaktseite des umlaufenden Förderelements anliegt, vorzugweise an einem Untertrum des umlaufenden Förderelements oder am Obertrum des umlaufenden Förderelements außerhalb eines Transportpfads für die Behälter (z. B. hinter einem Überschub). Vorteilhaft kann auf diese Weise der Reibkennwert zuverlässig erfasst werden, ohne dass der Behälterstrom negativ durch den Reibkörper beeinträchtigt wird.

In einer weiteren Ausführungsform kann die Sensoreinrichtung einen optischen Sensor, vorzugsweise Kamera oder Infrarotsensor, aufweisen, wobei der optische Sensor zum Erfassen mindestens eines von der Verschmutzung des umlaufenden Förderelements, der Verschmutzung der Behälter und des Reibkennwerts des umlaufenden Förderelements ausgebildet ist (und z. B. oberhalb, innerhalb oder unter dem Behälterförderer angeordnet ist). Vorteilhaft kann auf diese Weise ein Sensor bereitgestellt werden, der sowohl die Verschmutzung(en) als auch den Reibkennwert erfassen kann.

In einer Ausführungsvariante ist die Verarbeitungseinrichtung dazu konfiguriert, die Reinigungseinrichtung abhängig von der Signalausgabe der Sensoreinrichtung bezüglich der erfassten Verschmutzung (z. B. des umlaufenden Förderelements und/oder der Behälter) und/oder des erfassten Reibkennwerts dann zum Reinigen des umlaufenden Förderelements zu betreiben, wenn das umlaufende Förderelement im Leerlauf ist. Alternativ oder zusätzlich kann die Verarbeitungseinrichtung dazu konfiguriert sein, die Reinigungseinrichtung derart zum Reinigen des umlaufenden Förderelements zu betreiben, dass das umlaufende Förderelement nacheinander nur in von Behältern freien Abschnitten des umlaufenden Förderelements gereinigt wird. Vorteilhaft kann damit verhindert werden, dass die zum Reinigen des Förderelements bestimmte Reinigungsflüssigkeit ungewünscht die Behälter erreicht.

In einer weiteren Ausführungsvariante weist die Vorrichtung ferner eine Einrichtung zum Behandeln und/oder Fördern von Behältern auf, die (behälter-) stromaufwärts von dem Behälterförderer angeordnet ist.

In einem Ausführungsbeispiel ist die Verarbeitungseinrichtung ferner dazu konfiguriert, die Reinigungseinrichtung abhängig von der Signalausgabe der Sensoreinrichtung bezüglich der erfassten Verschmutzung (z. B. des umlaufenden Förderelements und/oder der Behälter) und/oder des erfassten Reibkennwerts dann zum Reinigen des umlaufenden Förderelements zu betreiben, wenn die Einrichtung eine Störung meldet und/oder angehalten ist. Vorteilhaft können damit Störungszeiten oder bspw. wartungsbedingte Stoppzeiten der Einrichtung, die dazu führen, dass den Behälterförderer temporär keine Behälter erreichen, dazu genutzt werden, den Behälterförderer mittels der Reinigungseinrichtung zu reinigen.

In einem weiteren Ausführungsbeispiel ist die Verarbeitungseinrichtung ferner dazu konfiguriert, die Einrichtung (z. B. temporär) zum Anhalten oder Verlangsamen zu betreiben, wenn die Reinigungseinrichtung abhängig von der Signalausgabe der Sensoreinrichtung bezüglich der erfassten Verschmutzung (z. B. des umlaufenden Förderelements und/oder der Behälter) und/oder des erfassten Reibkennwerts zum Reinigen des umlaufenden Förderelements betrieben wird. Vorteilhaft kann damit eine temporäre Reinigung des Behälterförderers mittels der Reinigungseinrichtung auch während des Produktionsbetriebs ermöglicht werden.

In einer Ausführungsform ist die Reinigungseinrichtung dazu ausgebildet, das umlaufene Förderelement nacheinander, vorzugsweise mit Wasser, abzuspülen, dann mit Reinigungsschaum zu behandeln und dann nochmals, vorzugsweise mit Wasser, abzuspülen. Vorteilhaft kann so eine besonders gründliche Reinigung und insbesondere auch ein Entfernen von verklebten Schmiermittelresten ermöglicht werden.

In einer weiteren Ausführungsform weist die Reinigungseinrichtung mindestens eine Sprühdüse auf. Vorzugsweise kann mindestens eine Sprühdüse zwischen einem Obertrum des umlaufenden Förderelements und einem Untertrum des umlaufenden Förderelements angeordnet sein. Alternativ oder zusätzlich kann mindestens eine Sprühdüse auf eine Oberseite (Behälterförderseite) des umlaufenden Förderelements gerichtet und bspw. unterhalb von einem Untertrum des umlaufenden Förderelements oder oberhalb von einem Obertrum des umlaufenden Förderelements angeordnet sein. Vorzugsweise kann mindestens eine Sprühdüse nur hin zum einem Untertrum des umlaufenden Förderelements gerichtet sein, und/oder mindestens eine Sprühdüse kann mehrere Auslassöffnungen aufweisen, von denen mindestens eine hin zu einem Obertrum des umlaufenden Förderelements und mindestens eine hin zu einem Untertrum des umlaufenden Förderelements gerichtet ist, und/oder jeweils mehrere Sprühdüsen können zu einer Sprühleiste kombiniert sein. Vorteilhaft kann damit eine gründliche Reinigung des Förderelements von innerhalb und/oder außerhalb des Behälterförderers ermöglicht werden.

In einer Ausführungsvariante weist die Reinigungseinrichtung mehrere, vorzugsweise mittels eines Ventilsystems der Reinigungseinrichtung, selektiv zuschaltbare Reinigungsabschnitte zum selektiven Reinigen unterschiedlicher (z. B. Längs-) Abschnitte des umlaufenden Förderelements auf. Vorzugsweise kann die Verarbeitungseinrichtung dazu konfiguriert sein, abhängig von einer Signalausgabe der Sensoreinrichtung eine Position der Verschmutzung des umlaufenden Förderelements zu ermitteln; und die Reinigungseinrichtung zum Reinigen des umlaufenden Förderelements derart zu betreiben, dass mindestens ein Reinigungsabschnitt der mehreren selektiv zuschaltbaren Reinigungsabschnitte abhängig von der ermittelten Position zum Reinigen der erfassten Verschmutzung zugeschaltet wird. Alternativ oder zusätzlich kann die Verarbeitungseinrichtung beispielsweise dazu konfiguriert sein, die Reinigungseinrichtung derart zum Reinigen des umlaufenden Förderelements zu betreiben, dass die selektiv zuschaltbaren Reinigungsabschnitte derart selektiv zugeschaltet werden, dass das umlaufende Förderelement nur in von Behältern freien Abschnitten des umlaufenden Förderelements gereinigt wird. Vorteilhaft kann damit eine nur abschnittsweise Reinigung des Förderelements ermöglicht werden, was beispielsweise die Flexibilität beim Reinigen erhöht und Reinigungsflüssigkeit und Reinigungszeit einspart.

In einer weiteren Ausführungsvariante weist die Vorrichtung ferner eine Schmiereinrichtung, vorzugsweise mit mindestens einer Schmierstoffsprühdüse und/oder Schmierstoffsprühleiste und/oder Schmierstoffpinseln, zum (z. B. dosierten) Schmieren einer Behälterkontaktseite (z. B. Oberseitenfläche) des umlaufenden Förderelements auf. Vorzugsweise kann die Verarbeitungseinrichtung ferner dazu konfiguriert sein, die Schmiereinrichtung zum dosierten Abgeben eines Schmierstoffs abhängig von einer Signalausgabe der Sensoreinrichtung bezüglich des erfassten Reibkennwerts zu betreiben, z. B. wenn der erfasste Reibkennwert größer als ein vorgegebener Soll-Reibkennwert ist und/oder bspw. außerhalb einer Toleranz liegt. Vorteilhaft kann der Betrieb des Behälterförderers somit durch sowohl die Schmiereinrichtung als auch die Reinigungseinrichtung in einem optimalen Bereich gehalten werden. Die Schmiereinrichtung und die Reinigungseinrichtung können dabei bevorzugt synergetisch zusammenwirken, da beispielsweise die Reinigungseinrichtung dann eingesetzt werden kann, wenn die Schmiereinrichtung trotz Schmieren des Förderelements keine gewünschten Reibeigenschaften des Förderelements mehr bewirkt. Die Reinigungseinrichtung kann dann beispielsweise dafür sorgen, dass das Förderelement wieder in einen (z. B. ungeschmierten) Grundzustand zurückversetzt wird, von dem aus eine Optimierung der Reibeigenschaften mittels der Schmiereinrichtung wieder möglich wird.

In einem Ausführungsbeispiel ist die Benutzerschnittstelle dazu konfiguriert, eine Benutzereingabe mindestens eines Betriebsparameters für die Schmiereinrichtung zu empfangen, wobei der mindestens eine Betriebsparameter aufweist:
- einen Soll-Reibkennwert und optional eine zulässige Toleranz (Hysterese) um den Soll-Reibkennwert; und/oder
- eine Pausenzeitdauer für aufeinanderfolgende Ventilöffnungen bei einem Dosieren eines Schmierstoffs mittels der Schmiereinrichtung; und/oder
- eine minimale Ventilöffnungszeitdauer bei einem Dosieren eines Schmierstoffs mittels der Schmiereinrichtung; und/oder
- eine Wartezeit bis zur nächsten Erfassung des Reibkennwerts nach dem Schmieren mittels der Schmiereinrichtung.

Vorteilhaft kann auf diese Weise eine für den jeweiligen Anwendungsfall optimierte Schmierung des Förderelements ermöglicht werden.

In einem weiteren Ausführungsbeispiel ist die Verarbeitungseinrichtung ferner dazu konfiguriert, erfasste Reibkennwerte und (durchgeführte) Betriebe der Schmiereinrichtung aufzuzeichnen. Optional kann die Verarbeitungseinrichtung ferner dazu konfiguriert sein, die Benutzerschnittstelle zum, vorzugsweise grafischen, Ausgeben der aufgezeichneten Reibkennwerte und Betriebe der Schmiereinrichtung zu betreiben, und/oder die aufgezeichneten Reibkennwerte und Betriebe der Schmiereinrichtung an eine Anlagensteuerung und/oder eine Remote-Servereinrichtung (z. B. Internet-Servereinrichtung) zu senden. Vorteilhaft kann damit eine nachträgliche Auswertung der Schmierung ermöglicht werden, um weitere Verbesserungspotenziale identifizieren zu können.

In einer Ausführungsform ist die Verarbeitungseinrichtung ferner dazu konfiguriert, die Benutzerschnittstelle zum Ausgeben der Aufforderung zum Reinigen des umlaufenden Förderelements zu betreiben und/oder die Reinigungseinrichtung zum Reinigen des umlaufenden Förderelements zu betreiben, wenn eine Signalausgabe der Sensoreinrichtung nach mehrmaligem Betreiben der Schmiereinrichtung angibt, dass der erfasste Reibkennwert des umlaufenden Förderelements im Wesentlichen unverändert ist oder sich vergrößert hat. Vorteilhaft können somit auch Situationen erkannt werden, bei denen sich der Reibkennwert des Förderelements mittels Schmieren durch die Schmiereinrichtung aufgrund von beispielsweise äußeren Einflüssen nicht verbessern lässt. Dies kann der Fall sein, wenn sich beispielsweise durch übermäßiges Schmieren des Förderelements verklumpte Schmiermittelreste an dem Förderelement absetzen.

Ein weiterer Aspekt betrifft eine Behälterbehandlungsanlage (z. B. zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Vorrichtung wie hierin offenbart aufweisen. Die Behälterbehandlungsanlage kann beispielsweise eine Getränkeabfüllanlage sein. Vorteilhaft können mit der Behälterbehandlungsanlage die gleichen Vorteile erzielt werden, die bereits unter Bezugnahme auf die Vorrichtung beschrieben wurden.

Beispielsweise können die Behälter als Flaschen, Dosen, Kanister, Kartons, Flakons, Tuben usw. ausgeführt sein.

Bevorzugt kann sich der Begriff "Verarbeitungseinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Verarbeitungseinrichtung kann beispielsweise eine Zentralverarbeitungseinrichtung sein oder mehrere dezentral bzw. verteilt angeordnete Verarbeitungseinheiten aufweisen.

Ein weiterer Aspekt betrifft ein Verfahren zum Betreiben einer Vorrichtung, vorzugsweise wie hierin offenbart, mit einem Behälterförderer aufweisend ein umlaufendes Förderelement (z. B. ein Förderband, eine Mattenkette, ein Scharnierband, eine Förderkette oder ein Plattenband) zum Fördern von Behältern (z. B. in einer Behälterbehandlungsanlage). Das Verfahren weist auf:
- Erfassen mindestens eines von einer Verschmutzung des umlaufenden Förderelements, einer Verschmutzung der Behälter und einem Reibkennwert (z. B. Reibzahl (Reibungskoeffizienten), Haftreibungszahl und/oder Gleitreibungszahl) des umlaufenden Förderelements (z. B. zu einem Referenzkörper/Reibkörper oder zu den Behältern) mittels einer Sensoreinrichtung der Vorrichtung.

Das Verfahren weist ferner mindestens eines auf von:
- Ausgeben einer Aufforderung zum Reinigen des umlaufenden Förderelements mittels einer Benutzerschnittstelle der Vorrichtung in Abhängigkeit von dem Erfassen; und
- (z. B. automatisches) Reinigen des umlaufenden Förderelements mittels einer (z. B. stationären) Reinigungseinrichtung der Vorrichtung in Abhängigkeit von dem Erfassen, vorzugsweise nacheinander nur in von Behältern freien Abschnitten des Förderelements und/oder wenn das umlaufende Förderelement im Leerlauf ist.

Vorteilhaft lassen sich mit dem Verfahren die gleichen Vorteile erzielen, die hierin bereits unter Bezugnahme auf die Vorrichtung beschrieben wurden. Selbiges gilt für die untenstehend erläuterten bevorzugten Ausführungsbeispiele des Verfahrens.

In einem Ausführungsbeispiel weist das Verfahren ferner mindestens eines auf von:
- (z. B. automatisches) Anhalten oder Verlangsamen einer Einrichtung zum Behandeln und/oder Fördern von Behältern, die (behälter-) stromaufwärts von dem Behälterförderer angeordnet ist, wenn das umlaufende Förderelement mittels der Reinigungseinrichtung gereinigt wird;
- (z. B. automatisches) Starten des Reinigens dann, wenn eine Einrichtung zum Behandeln und/oder Fördern von Behältern, die (behälter-) stromaufwärts von dem Behälterförderer angeordnet ist, eine Störung meldet und/oder angehalten ist;
- (z. B. automatisches und/oder dosiertes) Schmieren einer Behälterkontaktseite des umlaufenden Förderelements mittels einer Schmiereinrichtung der Vorrichtung in Abhängigkeit von dem Erfassen des Reibkennwerts;
- Vorgeben mindestens eines Betriebsparameters für die Schmiereinrichtung mittels Benutzereingabe an der Benutzerschnittstelle, wobei der mindestens eine Betriebsparameter aufweist: einen Soll-Reibkennwert und optional eine zulässige Toleranz (Hysterese) um den Soll-Reibkennwert; und/oder eine Pausenzeitdauer für aufeinanderfolgende Ventilöffnungen bei einem Dosieren eines Schmierstoffs mittels der Schmiereinrichtung; und/oder eine minimale Ventilöffnungszeitdauer bei einem Dosieren eines Schmierstoffs mittels der Schmiereinrichtung; und/oder eine Wartezeit bis zur nächsten Erfassung des Reibkennwerts nach dem Schmieren mittels der Schmiereinrichtung;
- Aufzeichnen der erfassten Reibkennwerte und (durchgeführten) Betriebe der Schmiereinrichtung;
- Ausgeben, vorzugsweise grafisches Ausgeben, der aufgezeichneten Reibkennwerte und Betriebe der Schmiereinrichtung mittels der Benutzerschnittstelle;
- Senden der aufgezeichneten Reibkennwerte und Betriebe der Schmiereinrichtung an eine Anlagensteuerung und/oder eine Remote-Servereinrichtung (z. B. Internet-Servereinrichtung).

In einem weiteren Ausführungsbeispiel ist mindestens eines erfüllt von:
- das Reinigen weist ein aufeinanderfolgendes Spülen, vorzugsweise mit Waser, dann Schaumreinigen und dann Spülen, vorzugsweise mit Wasser, des umlaufenden Förderelements auf;
- das Reinigen weist ein aufeinanderfolgendes, selektives Reinigen unterschiedlicher (z. B. Längs-) Abschnitte des umlaufenden Förderelements mittels selektiv zuschaltbarer Reinigungsabschnitte der Reinigungseinrichtung auf;
- das Reinigen weist ein Reinigen einer Verschmutzung des umlaufendenden Förderelements, deren Position zuvor von der Sensoreinrichtung erfasst wurde, mittels eines selektiv zugeschalteten Reinigungsabschnitts von mehreren selektiv zuschaltbaren Reinigungsabschnitten der Reinigungseinrichtung auf;
- das Reinigen weist selektives Zuschalten von mehreren selektiv zuschaltbaren Reinigungsabschnitten der Reinigungseinrichtung derart auf, dass das umlaufende Förderelement nur in von Behältern freien Abschnitten des umlaufenden Förderelements gereinigt wird; und
- das Ausgeben der Aufforderung zum Reinigen und/oder das Reinigen des umlaufenden Förderelements erfolgt, wenn nach mehrmaligen (z. B. automatischen) Schmieren einer Behälterkontaktseite des umlaufenden Förderelements der erfasste Reibkennwert des umlaufenden Förderelements im Wesentlichen unverändert ist oder sich vergrößert hat (z. B. weil ein Schmierstoff das umlaufende Förderelement verklebt).

Die zuvor beschriebenen bevorzugten Ausführungsformen und Merkmale der Erfindung sind beliebig miteinander kombinierbar.

### Kurzbeschreibung der Figur

Weitere Einzelheiten und Vorteile der Erfindung werden im Folgenden unter Bezug auf die beigefügte Zeichnung beschrieben. Es zeigt:

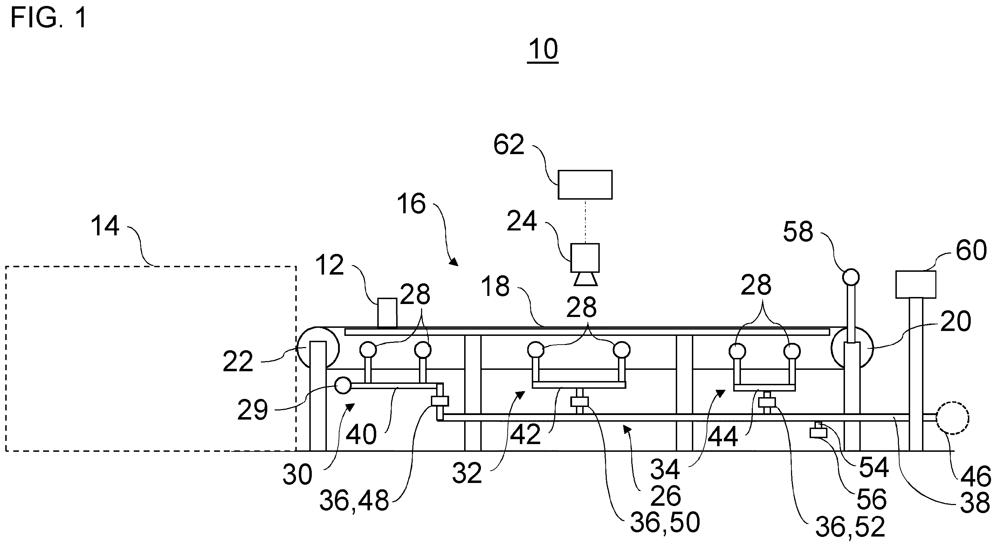

- Figur 1: eine Vorrichtung zum Fördern von Behältern gemäß einem Ausführungsbeispiel.

### Detaillierte Beschreibung beispielhafter Ausführungsformen

Figur 1 zeigt eine Vorrichtung 10 zum Fördern von Behältern 12. Die Vorrichtung 10 ist bevorzugt in einer Behälterbehandlungsanlage umfasst.

Die Vorrichtung 10 weist einen Behälterförderer 16 mit einem umlaufenden Förderelement 18, eine Sensoreinrichtung 24 und eine Verarbeitungseinrichtung 62 auf. Zusätzlich weist die Vorrichtung 10 eine Benutzerschnittstelle 60 und/oder eine Reinigungseinrichtung 26 auf. Bevorzugt kann die Vorrichtung 10 ferner eine (weitere) Einrichtung/Maschine 14 und/oder eine Schmiereinrichtung 58 aufweisen.

Die Einrichtung/Maschine 14 ist zum Behandeln und/oder Fördern der Behälter 12 ausgebildet. Beispielsweise kann die Einrichtung 14 dazu ausgebildet sein, Behälter 12 zu temperieren, herzustellen, zu reinigen, zu beschichten, zu prüfen, zu füllen, zu verschließen, zu pasteurisieren, zu etikettieren, zu bedrucken, zu beschriften, zu verpacken und/oder zu transportieren.

Die Einrichtung 14 kann stromaufwärts von dem Behälterförderer 16 angeordnet sein. Beispielsweise kann die Einrichtung 14 direkt stromaufwärts von dem Behälterförderer 16 oder entfernt stromaufwärts von dem Behälterförderer 16 angeordnet sein.

Es ist möglich, dass ein Betrieb der Einrichtung 14 temporär gestört sein kann, z. B. wegen eines umgefallenen/verkanteten Behälters 12, verschleißbedingt, wegen fehlerhafter Benutzung oder wegen einer mangelnden Medienversorgung (z. B. Rohstoff, Hilfsstoff, Betriebsstoff, Energie usw.). Eine Information über das Auftreten einer Störung der Einrichtung 14 kann von der Verarbeitungseinrichtung 62 empfangen werden, z. B. von einer Anlagensteuerung oder der Einrichtung 14 selbst.

Der Behälterförderer 16 weist das umlaufende Förderelement 18 zum Fördern der Behälter 12 auf. Bevorzugt kann das Förderelement 18 die Behälter 12 beim Fördern bodenseitig abstützen. Die Behälter 12 können beim Fördern bevorzugt aufrecht auf dem Förderelement 18 stehen.

Der Behälterförderer 16 kann beispielsweise ein Gestell mit Rahmen und Stützbeinen zum Tragen des Förderelements 18 aufweisen.

Der Behälterförderer 16 kann eine Führungseinrichtung zum seitlichen Führen der Behälter 12 quer zur Transportrichtung des Behälterförderers 16 aufweisen. Die Führungseinrichtung kann vorzugsweise an einer oder beiden Längsseiten des Behälterförderers 16 angeordnet sein. Die Führungseinrichtung kann bspw. Führungsgeländer oder Führungswände aufweisen.

Vorzugsweise kann das Förderelement 18 konstruktionsbedingt flüssigkeitsdurchlässig sein. Flüssigkeit kann von einer Unterseite des Förderelements 18 zu einer Oberseite (Behälterkontaktseite) des Förderelements 18 gelangen und umgekehrt. Beispielsweise kann das umlaufende Förderelement 18 ein Förderband, eine Mattenkette, ein Scharnierband, eine Förderkette oder ein Plattenband sein.

Das Förderelement 18 kann bspw. eine Antriebsrolle 20 und eine Umlenkrolle 22 des Behälterförderers 16 umlaufen. Ober- und Untertrum des Förderelements 18 können abgestützt sein, z. B. mittels Stützflächen, Rollen usw. Die Antriebsrolle 20 kann mittels einer Antriebseinheit des Behälterförderers 16 zum Bewegen des umlaufenden Förderelements 18 zum Fördern der Behälter 12 angetrieben sein. Die Antriebseinheit kann beispielsweise ein Elektromotor sein.

Die Sensoreinrichtung 24 ist dazu ausgebildet, eine Verschmutzung des umlaufenden Förderelements 18 und/oder eine Verschmutzung der Behälter 12 und/oder einen Reibkennwert des umlaufenden Förderelements 18 zu erfassen. Die Sensoreinrichtung 24 kann hierfür einen oder mehrere Sensoren aufweisen.

Es ist möglich, dass die Sensoreinrichtung 24 einen Sensor aufweist, der sowohl die Verschmutzung(en) als auch den Reibkennwert erfassen kann.

Es ist auch möglich, dass die Sensoreinrichtung 24 mindestens einen Sensor (Verschmutzungssensor) zum Erfassen der Verschmutzung(en) und mindestens einen weiteren Sensor (Reibungssensor) zum Erfassen des Reibkennwerts aufweist.

Es ist ebenfalls möglich, dass die Sensoreinrichtung 24 lediglich einen Sensor (Verschmutzungssensor) zum Erfassen der Verschmutzung(en) oder lediglich einen Sensor (Reibungssensor) zum Erfassen des Reibkennwerts aufweisen kann.

Die Sensoreinrichtung 24 kann bspw. mindestens einen optischen Sensor und/oder mindestens einen Kontaktsensor (berührender Sensor) zum Erfassen der Verschmutzung(en) und/oder des Reibkennwerts aufweisen.

Beispielsweise kann mindestens ein optischer Sensor oberhalb von dem Behälterförderer 16 angeordnet und auf das umlaufende Förderelement 18 gerichtet sein. Alternativ oder zusätzlich kann mindestens ein optischer Sensor geschützt innerhalb des Behälterförderers 16 oder unter dem Behälterförderer 16 angeordnet und auf das umlaufende Förderelement 18 gerichtet sein.

Der mindestens eine optische Sensor kann bspw. eine Kamera (z. B. mit CCD-Chip oder CMOS-Chip), einen Infrarotsensor, einen Lasersensor oder einen LED-Sensor aufweisen. Die Erfassung der Verschmutzung(en) und/oder des Reibkennwerts kann bspw. unter Verwendung von Bilderkennungsalgorithmen erfolgen.

Mittels Bilderkennungsalgorithmus können bspw. Verschmutzungen des Förderelements 18 oder eines Behälters 12 in einer Aufnahme des mindestens einen optischen Sensors erkannt werden. Mittels Bilderkennungsalgorithmus kann bspw. eine Bewegung der Behälter 12 auf dem umlaufenden Förderelement 18, z. B. beim Übernehmen oder Übergeben der Behälter 12, analysiert und auf einen Reibkennwert des Förderelements 18 zu den Behältern 12 geschlossen werden.

Alternativ oder zusätzlich zum optischen Sensor kann mindestens ein Kontaktsensor am Obertrum des Förderelements 18, am Untertrum des Förderelements 18 und/oder an der Führungseinrichtung des Behälterförderers 16 angeordnet sein. Beispielsweise kann das Förderelement 18 an mindestens einem Kontaktsensor ablaufen und/oder die Behälter 12 können entlang mindestens eines Kontaktsensors bewegt werden.

Beispielsweise kann der mindestens eine Kontaktsensor einen Biofilmsensor zum Erfassen der Verschmutzung(en) aufweisen. Der Biofilmsensor kann bspw. so angeordnet sein, dass er temporär oder dauerhaft eine Behälterkontaktseite des Förderelements 18 berührt oder die Behälter 12 an dem Biofilmsensor vorbeigeführt werden.

Es ist auch möglich, dass der mindestens eine Kontaktsensor einen Reibkörper und einen damit verbundenen Kraftaufnehmer aufweist. Der Reibkörper kann an der Behälterkontaktseite des umlaufenden Förderelements 18 anliegen. Bevorzugt liegt der Reibkörper am Untertrum der Behälterkontaktseite des umlaufenden Förderelements 18 an. Alternativ kann der Reibkörper bspw. am Obertrum des umlaufenden Förderelements 18, aber außerhalb eines Transportpfads für die Behälter 12, anliegen. Beispielsweise kann der Reibkörper so an die Behälterkontaktseite angelegt werden, dass das umlaufende Förderelement 18 an einer Oberfläche des Reibkörpers entlanggleitet und eine (z. B. Zug-) Kraft in Laufrichtung des Förderelements 18 auf den Reibkörper wirkt. Diese Kraft kann mittels des Kraftaufnehmer gemessen und zum Erfassen des Reibkennwerts ausgewertet werden. Der erfasste Reibkennwert kann bspw. eine Reibzahl (Reibungskoeffizienten), vorzugsweise eine Haftreibungszahl und/oder eine Gleitreibungszahl, aufweisen.

Die Reinigungseinrichtung 26 ist dazu ausgebildet, das umlaufene Förderelement 18 zu reinigen. Bspw. kann die Reinigungseinrichtung 26 das umlaufende Förderelement 18 mit Wasser und/oder Schaum reinigen. Beispielsweise kann die Reinigungseinrichtung 26 das umlaufende Förderelement 18 in einem Reinigungsvorgang nacheinander, vorzugsweise mit Wasser, abspülen, dann mit Reinigungsschaum behandeln und dann nochmals, vorzugsweise mit Wasser, abspülen.

Bevorzugt kann die Reinigungseinrichtung 26 das umlaufende Förderelement 18 von innerhalb eines Rahmens des Behälterförderers 16 aus reinigen.

Beispielsweise kann die Reinigungseinrichtung 26 mindestens eine Sprühdüse 28 und/oder 29 aufweisen.

Bevorzugt kann die mindestens eine Sprühdüse 28 zwischen einem Obertrum des Förderelements 18 und einem Untertrum des Förderelements 18 angeordnet sein.

Mindestens eine Sprühdüse 28 kann bspw. nur hin zum dem Untertrum gerichtet sein. Alternativ oder zusätzlich kann mindestens eine Sprühdüse 28 mehrere Auslassöffnungen aufweisen, von denen mindestens eine hin zu dem Obertrum und mindestens eine hin zu dem Untertrum des Förderelements 18 gerichtet ist.

Bevorzugt kann die mindestens eine Sprühdüse 29 auf eine Oberseite bzw. Behälterfördererseite / Behälteraufstandsseite des Förderelements 18 gerichtet sein. Die mindestens eine Sprühdüse 29 kann bspw. unterhalb von dem Untertrum des Förderelements 18 angeordnet sein, wie in Figur 1 beispielhaft dargestellt ist. Alternativ kann die mindestens eine Sprühdüse 29 bspw. oberhalb von dem Obertrum des Förderelements 18 angeordnet sein (nicht in Figur 1 dargestellt).

Es ist möglich, dass jeweils mehrere Spühdüsen 28 oder jeweils mehrere Sprühdüsen 29 zu einer Sprühleiste (einem Sprühbalken/einer Sprühlanze) kombiniert sind. Beispielsweise kann eine Rohrleitung mehrere Sprühdüsen aufweisen, die entlang einer Längsachse der Rohrleitung/Sprühleiste voneinander beabstandet sind. Die Längsachse der Rohrleitung/Sprühleiste kann bspw. parallel oder quer zu einer Längsachse des Behälterförderers 16 sein. Eine Sprühleiste aus mehreren Sprühdüsen 28 kann bspw. zwischen dem Obertrum und dem Untertrum des umlaufenden Förderelements 18 angeordnet sein. Eine Sprühleiste aus mehreren Sprühdüsen 29 kann bspw. oberhalb von dem Obertrum oder unterhalb von dem Untertrum des Förderelements 18 angeordnet sein.

Es ist auch möglich, dass mehrere Sprühleisten mit jeweils mehreren Spühdüsen 28 umfasst sind. Die Sprühleisten können beispielsweise parallel zueinander angeordnet sein.

Vorzugsweise weist die Reinigungseinrichtung 26 mehrere selektiv zuschaltbare Reinigungsabschnitte 30, 32, 34 auf. Je nach zugeschaltetem Reinigungsabschnitt 30, 32, 34 können unterschiedliche Abschnitte des umlaufenden Förderelements 18 gereinigt werden. Bevorzugt können die Reinigungsabschnitte 30, 32, 34 selektiv mittels eines Ventilsystems 36 der Reinigungseinrichtung 26 zugeschaltet werden.

Beispielsweise kann die Reinigungseinrichtung 26 eine Hauptleitung 38 und mehrere Zweigleitungen 40, 42, 44 aufweisen.

Die Hauptleitung 38 kann beispielsweise mit einer Reinigungsflüssigkeitsquelle 46 verbunden sein. Die Reinigungsflüssigkeitsquelle 46 kann bevorzugt mindestens eine Reinigungsflüssigkeit bereitstellen, z. B. Wasser und/oder Reinigungsschaum bzw. beim Versprühen Schaum bildende Reinigungsflüssigkeit.

Die Zweigleitungen 40, 42, 44 können vorzugsweise jeweils mindestens eine Sprühdüse 28 oder jeweils mindestens eine Sprühleiste mit jeweils mehreren Sprühdüsen 28 aufweisen.

Die Zweigleitungen 40, 42, 44 können in zueinander unterschiedlichen Bereichen des Behälterförderers 16 angeordnet sein, z. B. in einem (behälter-) stromaufwärtsseitigen Endbereich des Behälterförderers 16, in einem Mittelbereich des Behälterförderers 16 und/oder in einem (behälter-) stromabwärtsseitigen Endbereich des Behälterförderers 16. Die Zweigleitungen 40, 42, 44 können somit die mehreren Reinigungsabschnitte 30, 32, 34 definieren/vorgeben.

Die Zweigleitungen 40, 42, 44 können jeweils von der Hauptleitung 38 abzweigen. Vorzugsweise kann an der jeweiligen Abzweigung oder in der jeweiligen Zweigleitung 40, 42, 44 ein Ventil 48, 50 bzw. 52 des Ventilsystems 36 angeordnet sein. Die Ventile 48, 50, 52 sind bevorzugt als Absperrventile ausgeführt. Über die Ventile 48, 50, 52 können die Zweigleitungen 40, 42, 44 und somit die Reinigungsabschnitte 30, 32, 34 selektiv zugeschaltet werden.

Es versteht sich, dass die Reinigungseinrichtung 26 - je nach Anwendungsfall - bspw. eine unterschiedliche Anzahl von Sprühdüsen 28, eine unterschiedliche Anzahl von Reinigungsabschnitten 30, 32, 34, eine unterschiedliche Anzahl von Zweigleitungen 40, 42, 44 und/oder eine unterschiedliche Anzahl von Ventilen 48, 50, 52 aufweisen kann.

Die selektive Zuschaltbarkeit der Reinigungsabschnitte 30, 32, 34 ermöglicht beispielsweise, dass ein aufeinanderfolgendes, selektives Reinigen unterschiedlicher Abschnitte des umlaufenden Förderelements 18 mittels der selektiv zuschaltbaren Reinigungsabschnitte 30, 32, 34 erfolgt, z. B. gesteuert durch die Verarbeitungseinrichtung 62. Dies kann in mehreren Szenarien vorteilhaft sein.

Beispielsweise kann ein begrenzter Reinigungsflüssigkeitsstrom von der Reinigungsflüssigkeitsquelle 46 somit nacheinander auf die Reinigungsabschnitte 30, 32, 34 aufgeteilt werden.

Beispielsweise können die Reinigungsabschnitte 30, 32, 34 im Betrieb der Vorrichtung 10 derart selektiv zu- und abgeschaltet werden, dass das Förderelement 18 jeweils nur in von Behältern 12 freien Abschnitten des Förderelements 18 gereinigt wird.

Beispielsweise kann eine Verschmutzung des Förderelements 18 gezielt gereinigt werden. Eine Position der Verschmutzung kann bspw. zuvor von der Sensoreinrichtung 24 erfasst werden. Anhängig von einer Signalausgabe der Sensoreinrichtung 24 bezüglich der erfassten Position kann die Verschmutzung dann mittels eines selektiv zugeschalteten Reinigungsabschnitts der mehreren Reinigungsabschnitte 30, 32, 34 gezielt gereinigt werden, z. B. gesteuert durch die Verarbeitungseinrichtung 62.

Es ist möglich, dass die Reinigungseinrichtung 26 bspw. noch eine Ablassleitung 54 aufweist. Die Ablassleitung 54 kann von der Hauptleitung 38 abzweigen. Vorzugsweise kann an der Abzweigung oder in der Ablassleitung 54 ein Ventil 56 angeordnet sein. Das Ventil 56 ist bevorzugt als Absperrventil ausgeführt. Über die Ablassleitung 54 und das (geöffnete) Ventil 56 kann Reinigungsflüssigkeit aus der Hauptleitung 38 abgelassen werden.

Die Schmiereinrichtung 58 ist dazu ausgebildet, eine Behälterkontaktseite des Förderelements 18 zu schmieren, z. B. mit einem trockenen, pastösen oder flüssigen Schmierstoff. Beispielsweise kann die Schmiereinrichtung 58 mindestens eine Schmierstoffsprühdüse, Schmierstoffsprühleiste und/oder Schmierstoffpinsel zum Schmieren der Behälterkontaktseite des Förderelements 18 aufweisen.

Die Schmiereinrichtung 58 gibt das Schmiermittel bevorzugt dosiert ab. Hierzu kann bspw. ein Zuführventil der Schmiereinrichtung 58 in aufeinanderfolgenden Takten jeweils für eine vorgegebene Zeitdauer (= Ventilöffnungszeitdauer) geöffnet und geschlossen (=Wartezeit) werden, bis eine vorgegebene Menge an Schmierstoff auf die Behälterkontaktseite des Förderelements 18 aufgebracht wurde.

Bevorzugt kann bspw. die Verarbeitungseinrichtung 62 die erfassten Reibkennwerte und Betriebe (z. B. bezüglich Schmierzeitpunkte und/oder Schmierstoffmengen) der Schmiereinrichtung 58 aufzeichnen. Die aufgezeichneten Reibkennwerte und Betriebe der Schmiereinrichtung 58 können dann bspw. mittels der Benutzerschnittstelle 60 ausgegeben werden. Auch möglich ist es, die aufgezeichneten Reibkennwerte und Betriebe der Schmiereinrichtung 58 an eine Anlagensteuerung der Behälterbehandlungsanlage und/oder eine Remote-Servereinrichtung zu senden.

Die Benutzerschnittstelle 60 kann dazu ausgebildet sein, Benutzereingaben zu empfangen und/oder Informationen an einen Benutzer auszugeben. Bspw. kann die Benutzerschnittstelle 60 eine visuelle, akustische und/oder haptische/taktile Benutzerschnittstelle sein. Bevorzugt kann die Benutzerschnittstelle 60 eine, vorzugsweise berührungsempfindliche, Anzeige, einen Lautsprecher, ein Mikrofon, eine Tastatur, einen Knopf und/oder mindestens eine Signalleuchte aufweisen.

Die Benutzerschnittstelle 60 kann von einem Benutzer bspw. dazu genutzt werden, Betriebsparameter für die Reinigungseinrichtung 26 und/oder die Schmiereinrichtung 58 einzugeben.

Besonders bevorzugt können mittels der Benutzerschnittstelle 60 die nachfolgenden Betriebsparameter, einzeln oder in jeglicher Kombination, für die Schmiereinrichtung 58 vorgegeben werden: einen Soll-Reibkennwert und eine zulässige Toleranz (Hysterese) um den Soll-Reibkennwert; eine Pausenzeitdauer für aufeinanderfolgende Ventilöffnungen bei einem Dosieren eines Schmierstoffs mittels der Schmiereinrichtung 58; eine minimale Ventilöffnungszeitdauer bei einem Dosieren eines Schmierstoffs mittels der Schmiereinrichtung 58; eine Wartezeit bis zur nächsten Erfassung des Reibkennwerts nach dem Schmieren mittels der Schmiereinrichtung 58.

Die Vorrichtung 10 kann ferner wie nachfolgend erläutert betrieben werden, z. B. von der Verarbeitungseinrichtung 62.

Mittels der Sensoreinrichtung 24 kann eine Verschmutzung des umlaufenden Förderelements 18, eine Verschmutzung der Behälter 12 und/oder ein Reibkennwert des umlaufenden Förderelements 18 erfasst werden. Je nach Ausbildung der Sensoreinrichtung 24 kann diese nur eines, zwei oder alle drei von der Verschmutzung des umlaufenden Förderelements 18, der Verschmutzung der Behälter 12 und dem Reibkennwert erfassen.

Abhängig von dem Erfassen kann dann eine Aufforderung zum Reinigen des Förderelements 18 mittels der Benutzerschnittstelle 60 ausgegeben werden. Wird bspw. eine Verschmutzung des Förderelements 18 oder einer Verschmutzung der Behälter 12 erfasst, wird die Benutzerschnittstelle 60 entsprechend zum Ausgeben der Aufforderung betrieben. Die Benutzerschnittstelle 60 kann alternativ oder zusätzlich zum Ausgeben der Aufforderung in Abhängigkeit von dem erfassten reibkennwert betrieben werden, z. B. wenn der erfasste Reibkennwert nach mehrmaligen Schmieren der Behälterkontaktseite des Förderelements 18 im Wesentlichen unverändert ist oder sich vergrößert hat, z. B. weil ein Schmierstoff das umlaufende Förderelement verklebt. Beispielsweise kann die Verarbeitungseinrichtung 62 dazu konfiguriert sein, die Benutzerschnittstelle 60 wie erläutert zum Ausgeben der Aufforderung in Abhängigkeit von einer Signalausgabe der Sensoreinrichtung 24 zu betreiben.

Besonders bevorzugt ist jedoch, dass das umlaufende Förderelement mittels der Reinigungseinrichtung 26 gereinigt wird, wenn eine Verschmutzung erfasst wird oder wenn der erfasste Reibkennwert nach mehrmaligen Schmieren der Behälterkontaktseite des Förderelements 18 im Wesentlichen unverändert ist oder sich vergrößert hat. Beispielsweise kann die Verarbeitungseinrichtung 62 dazu konfiguriert sein, die Reinigungseinrichtung 26 wie erläutert zum Reinigen des Förderelements 18 zu betreiben.

Vorzugsweise kann die Reinigungseinrichtung 26 beim Reinigen entsprechend dem mindestens einen mittels der Benutzerschnittstelle 60 vorgegebenen Betriebsparameter betrieben werden, z. B. mittels der Verarbeitungseinrichtung 62.

Bevorzugt kann der Behälterförderer 16 gereinigt werden, wenn er keine Behälter 12 transportiert, z. B. wenn das Förderelement 18 im Leerlauf ist. Dies kann bspw. in geplanten Betriebs- und Wartungspausen sein. Es ist jedoch auch möglich, dass das Reinigen mittels der Reinigungseinrichtung 26 während temporärer Pausen im Produktionsbetrieb durchgeführt wird.

Beispielsweise kann das Reinigen starten, wenn die stromaufwärts angeordnete Einrichtung 14 eine Störung meldet oder angehalten ist, und somit keine Behälter 12 von dem Behälterförderer 16 transportiert werden. Vorzugsweise kann die Verarbeitungseinrichtung 62 dazu konfiguriert sein, die Reinigungseinrichtung 26 dann zum Reinigen des Förderelements 18 zu betreiben, wenn die Einrichtung 14 eine Störung meldet und/oder angehalten ist.

Es ist auch möglich, dass die Einrichtung 14 extra angehalten oder verlangsamt wird, wenn das umlaufende Förderelement 18 mittels der Reinigungseinrichtung 26 gereinigt wird. Beispielsweise kann die Verarbeitungseinrichtung 62 dazu konfiguriert sein, die Einrichtung 14 zum Anhalten oder Verlangsamen zu betreiben, wenn die Reinigungseinrichtung 26 zum Reinigen des Förderelements 18 betrieben wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Behälterförderers, des umlaufenden Förderelements, der Sensoreinrichtung, der Benutzerschnittstelle, der Reinigungseinrichtung und/oder der Verarbeitungseinrichtung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung
- 12: Behälter
- 14: Einrichtung zum Behandeln und/oder Fördern von Behältern
- 16: Behälterförderer
- 18: umlaufendes Förderelement
- 20: Antriebsrolle
- 22: Umlenkrolle
- 24: Sensoreinrichtung
- 26: Reinigungseinrichtung
- 28: Sprühdüse
- 29: Sprühdüse
- 30: Reinigungsabschnitt
- 32: Reinigungsabschnitt
- 34: Reinigungsabschnitt
- 36: Ventilsystem
- 38: Hauptleitung
- 40: Zweigleitung
- 42: Zweigleitung
- 44: Zweigleitung
- 46: Reinigungsflüssigkeitsquelle
- 48: Ventil
- 50: Ventil
- 52: Ventil
- 54: Ablassleitung
- 56: Ventil
- 58: Schmiereinrichtung
- 60: Benutzerschnittstelle
- 62: Verarbeitungseinrichtung

## Patentansprüche

1. Vorrichtung (10) zum Fördern von Behältern (12) für eine Behälterbehandlungsanlage, wobei die Vorrichtung (10) aufweist:
einen Behälterförderer (16) mit einem umlaufenden Förderelement (18) zum Fördern der Behälter (12);
eine Sensoreinrichtung (24), die dazu ausgebildet ist, mindestens eines zu erfassen von einer Verschmutzung des umlaufenden Förderelements (18), einer Verschmutzung der Behälter (12) und einem Reibkennwert des umlaufenden Förderelements (18);
mindestens eines von einer Benutzerschnittstelle (60) und einer Reinigungseinrichtung (26) zum Reinigen des umlaufenden Förderelements (18); und
eine Verarbeitungseinrichtung (62), die dazu konfiguriert ist, abhängig von einer Signalausgabe der Sensoreinrichtung (24) bezüglich der erfassten Verschmutzung und/oder des erfassten Reibkennwerts:
- die Benutzerschnittstelle (60) zum Ausgeben einer Aufforderung zum Reinigen des umlaufenden Förderelements (18) zu betreiben; und/oder
- die Reinigungseinrichtung (26) zum Reinigen des umlaufenden Förderelements (18) zu betreiben.

2. Vorrichtung (10) nach Anspruch 1, wobei:
die Sensoreinrichtung (24) weist mindestens einen Sensor zum Erfassen der Verschmutzung des umlaufenden Förderelements (18) und/oder der Verschmutzung der Behälter (12) und mindestens einen weiteren Sensor zum Erfassen des Reibkennwerts auf, oder
die Sensoreinrichtung (24) weist mindestens einen Sensor auf, der dazu ausgebildet ist, sowohl die Verschmutzung des umlaufenden Förderelements (18) und/oder die Verschmutzung der Behälter (12) als auch den Reibkennwert zu erfassen.

3. Vorrichtung (10) nach Anspruch 1 oder Anspruch 2, wobei die Sensoreinrichtung (24) mindestens eines aufweist von:
einen Biofilmsensor zum Erfassen der Verschmutzung des umlaufenden Förderelements (18) und/oder der Verschmutzung der Behälter (12);
einen Reibkörper und einen damit verbundenen Kraftaufnehmer zum Erfassen des Reibkennwerts, wobei der Reibkörper an einer Behälterkontaktseite des umlaufenden Förderelements (18) anliegt, nämlich an einem Untertrum des umlaufenden Förderelements (18) oder am Obertrum des umlaufenden Förderelements (18) außerhalb eines Transportpfads für die Behälter (12); und
einen optischen Sensor, vorzugsweise Kamera oder Infrarotsensor, wobei der optische Sensor zum Erfassen mindestens eines von der Verschmutzung des umlaufenden Förderelements (18), der Verschmutzung der Behälter (12) und des Reibkennwerts des umlaufenden Förderelements (18) ausgebildet ist.

4. Vorrichtung (10) nach einem der vorherigen Ansprüche, wobei:
die Verarbeitungseinrichtung (62) ferner dazu konfiguriert ist:
- die Reinigungseinrichtung (26) abhängig von der Signalausgabe der Sensoreinrichtung (24) bezüglich der erfassten Verschmutzung und/oder des erfassten Reibkennwerts dann zum Reinigen des umlaufenden Förderelements (18) zu betreiben, wenn das umlaufende Förderelement (18) im Leerlauf ist; und/oder
- die Reinigungseinrichtung (26) derart zum Reinigen des umlaufenden Förderelements (18) zu betreiben, dass das umlaufende Förderelement (18) nacheinander nur in von Behältern (12) freien Abschnitten des umlaufenden Förderelements (18) gereinigt wird.

5. Vorrichtung (10) nach einem der vorherigen Ansprüche, ferner aufweisend:
eine Einrichtung (14) zum Behandeln und/oder Fördern von Behältern (12), die stromaufwärts von dem Behälterförderer (16) angeordnet ist,
wobei:
die Verarbeitungseinrichtung (62) ferner dazu konfiguriert ist:
- die Reinigungseinrichtung (26) abhängig von der Signalausgabe der Sensoreinrichtung (24) bezüglich der erfassten Verschmutzung und/oder des erfassten Reibkennwerts dann zum Reinigen des umlaufenden Förderelements (18) zu betreiben, wenn die Einrichtung (14) eine Störung meldet und/oder angehalten ist; und/oder
- die Einrichtung (14) zum Anhalten oder Verlangsamen zu betreiben, wenn die Reinigungseinrichtung (26) abhängig von der Signalausgabe der Sensoreinrichtung (24) bezüglich der erfassten Verschmutzung und/oder des erfassten Reibkennwerts zum Reinigen des umlaufenden Förderelements (18) betrieben wird.

6. Vorrichtung (10) nach einem der vorherigen Ansprüche, wobei:
die Reinigungseinrichtung (26) dazu ausgebildet ist, das umlaufene Förderelement (18) nacheinander, vorzugsweise mit Wasser, abzuspülen, dann mit Reinigungsschaum zu behandeln und dann nochmals, vorzugsweise mit Wasser, abzuspülen.

7. Vorrichtung (10) nach einem der vorherigen Ansprüche, wobei:
die Reinigungseinrichtung (26) mindestens eine Sprühdüse (28, 29) aufweist, wobei vorzugsweise mindestens eines erfüllt ist von:
mindestens eine Sprühdüse (28) ist zwischen einem Obertrum des umlaufenden Förderelements (18) und einem Untertrum des umlaufenden Förderelements (18) angeordnet;
mindestens eine Sprühdüse (29) ist auf eine Oberseite des umlaufenden Förderelements (18) gerichtet;
mindestens eine Sprühdüse (28) ist nur hin zum einem Untertrum des umlaufenden Förderelements (18) gerichtet;
mindestens eine Sprühdüse (28) weist mehrere Auslassöffnungen auf, von denen mindestens eine hin zu einem Obertrum des umlaufenden Förderelements (18) und mindestens eine hin zu dem Untertrum des umlaufenden Förderelements (18) gerichtet ist; und
jeweils mehrere Sprühdüsen (28, 29) sind zu einer Sprühleiste kombiniert.

8. Vorrichtung (10) nach einem der vorherigen Ansprüche, wobei:
die Reinigungseinrichtung (26) mehrere, vorzugsweise mittels eines Ventilsystems (36) der Reinigungseinrichtung (26), selektiv zuschaltbare Reinigungsabschnitte (30, 32, 34) zum selektiven Reinigen unterschiedlicher Abschnitte des umlaufenden Förderelements (18) aufweist; und optional
die Verarbeitungseinrichtung (62) dazu konfiguriert ist:
- abhängig von einer Signalausgabe der Sensoreinrichtung (24) eine Position der Verschmutzung des umlaufenden Förderelements (18) zu ermitteln; und die Reinigungseinrichtung (26) zum Reinigen des umlaufenden Förderelements (18) derart zu betreiben, dass mindestens ein Reinigungsabschnitt (30, 32, 34) der mehreren selektiv zuschaltbaren Reinigungsabschnitte (30, 32, 34) abhängig von der ermittelten Position zum Reinigen der erfassten Verschmutzung zugeschaltet wird; und/oder
- die Reinigungseinrichtung (26) derart zum Reinigen des umlaufenden Förderelements (18) zu betreiben, dass die selektiv zuschaltbaren Reinigungsabschnitte (30, 32, 34) derart selektiv zugeschaltet werden, dass das umlaufende Förderelement (18) nur in von Behältern (12) freien Abschnitten des umlaufenden Förderelements (18) gereinigt wird.

9. Vorrichtung (10) nach einem der vorherigen Ansprüche, ferner aufweisend:
eine Schmiereinrichtung (58), vorzugsweise mit mindestens einer Schmierstoffsprühdüse und/oder Schmierstoffsprühleiste und/oder Schmierstoffpinseln, zum Schmieren einer Behälterkontaktseite des umlaufenden Förderelements (18), wobei:
die Verarbeitungseinrichtung (62) ferner dazu konfiguriert ist, die Schmiereinrichtung (58) zum dosierten Abgeben eines Schmierstoffs abhängig von einer Signalausgabe der Sensoreinrichtung (24) bezüglich des erfassten Reibkennwerts zu betreiben.

10. Vorrichtung (10) nach Anspruch 9, wobei:
die Benutzerschnittstelle (60) dazu konfiguriert ist, eine Benutzereingabe mindestens eines Betriebsparameters für die Schmiereinrichtung (58) zu empfangen, wobei der mindestens eine Betriebsparameter aufweist:
- einen Soll-Reibkennwert und eine zulässige Toleranz um den Soll-Reibkennwert; und/oder
- eine Pausenzeitdauer für aufeinanderfolgende Ventilöffnungen bei einem Dosieren eines Schmierstoffs mittels der Schmiereinrichtung (58); und/oder
- eine minimale Ventilöffnungszeitdauer bei einem Dosieren eines Schmierstoffs mittels der Schmiereinrichtung (58); und/oder
- eine Wartezeit bis zur nächsten Erfassung des Reibkennwerts nach dem Schmieren mittels der Schmiereinrichtung (58).

11. Vorrichtung (10) nach Anspruch 9 oder Anspruch 10, wobei:
die Verarbeitungseinrichtung (62) ferner dazu konfiguriert ist:
- erfasste Reibkennwerte und Betriebe der Schmiereinrichtung (58) aufzuzeichnen; und optional
- die Benutzerschnittstelle zum, vorzugsweise grafischen, Ausgeben der aufgezeichneten Reibkennwerte und Betriebe der Schmiereinrichtung (58) zu betreiben; und/oder
- die aufgezeichneten Reibkennwerte und Betriebe der Schmiereinrichtung (58) an eine Anlagensteuerung und/oder eine Remote-Servereinrichtung zu senden.

12. Vorrichtung (10) nach einem der Ansprüche 9 bis 11, wobei:
die Verarbeitungseinrichtung (62) ferner dazu konfiguriert ist:
- die Benutzerschnittstelle (60) zum Ausgeben der Aufforderung zum Reinigen des umlaufenden Förderelements (18) zu betreiben und/oder die Reinigungseinrichtung (26) zum Reinigen des umlaufenden Förderelements (18) zu betreiben, wenn eine Signalausgabe der Sensoreinrichtung (24) nach mehrmaligem Betreiben der Schmiereinrichtung (58) angibt, dass der erfasste Reibkennwert des umlaufenden Förderelements (18) im Wesentlichen unverändert ist oder sich vergrößert hat.

13. Verfahren zum Betreiben einer Vorrichtung (10), vorzugsweise nach einem der Ansprüche 1 bis 12, mit einem Behälterförderer (16) aufweisend ein umlaufendes Förderelement (18) zum Fördern von Behältern (12), wobei das Verfahren aufweist:
Erfassen mindestens eines von einer Verschmutzung des umlaufenden Förderelements (18), einer Verschmutzung der Behälter (12) und einem Reibkennwert des umlaufenden Förderelements (18) mittels einer Sensoreinrichtung (24) der Vorrichtung (10); wobei das Verfahren ferner mindestens eines aufweist von:
Ausgeben einer Aufforderung zum Reinigen des umlaufenden Förderelements (18) mittels einer Benutzerschnittstelle (60) der Vorrichtung (10) in Abhängigkeit von dem Erfassen; und
Reinigen des umlaufenden Förderelements (18) mittels einer Reinigungseinrichtung (26) der Vorrichtung (10) in Abhängigkeit von dem Erfassen, vorzugsweise nacheinander nur in von Behältern (12) freien Abschnitten des Förderelements und/oder wenn das umlaufende Förderelement (18) im Leerlauf ist.

14. Verfahren nach Anspruch 13, ferner aufweisend mindestens eines von:
Anhalten oder Verlangsamen einer Einrichtung (14) zum Behandeln und/oder Fördern von Behältern (12), die stromaufwärts von dem Behälterförderer (16) angeordnet ist, wenn das umlaufende Förderelement (18) mittels der Reinigungseinrichtung (26) gereinigt wird;
Starten des Reinigens dann, wenn eine Einrichtung (14) zum Behandeln und/oder Fördern von Behältern (12), die stromaufwärts von dem Behälterförderer (16) angeordnet ist, eine Störung meldet und/oder angehalten ist;
Schmieren einer Behälterkontaktseite des umlaufenden Förderelements (18) mittels einer Schmiereinrichtung (58) der Vorrichtung (10) in Abhängigkeit von dem Erfassen des Reibkennwerts,
wobei vorzugsweise das Verfahren ferner mindestens eines aufweist von:
Vorgeben mindestens eines Betriebsparameters für die Schmiereinrichtung (58) mittels Benutzereingabe an der Benutzerschnittstelle (60), wobei der mindestens eine Betriebsparameter aufweist:
- einen Soll-Reibkennwert und eine zulässige Toleranz um den Soll-Reibkennwert; und/oder
- eine Pausenzeitdauer für aufeinanderfolgende Ventilöffnungen bei einem Dosieren eines Schmierstoffs mittels der Schmiereinrichtung (58); und/oder
- eine minimale Ventilöffnungszeitdauer bei einem Dosieren eines Schmierstoffs mittels der Schmiereinrichtung (58); und/oder
- eine Wartezeit bis zur nächsten Erfassung des Reibkennwerts nach dem Schmieren mittels der Schmiereinrichtung (58);
Aufzeichnen der erfassten Reibkennwerte und Betriebe der Schmiereinrichtung (58), und optional
Ausgeben, vorzugsweise grafisches Ausgeben, der aufgezeichneten Reibkennwerte und Betriebe der Schmiereinrichtung (58) mittels der Benutzerschnittstelle (60); und/oder
Senden der aufgezeichneten Reibkennwerte und Betriebe der Schmiereinrichtung (58) an eine Anlagensteuerung und/oder eine Remote-Servereinrichtung.

15. Verfahren nach Anspruch 13 oder Anspruch 14, wobei mindestens eines erfüllt ist von:
das Reinigen weist ein aufeinanderfolgendes Spülen, vorzugsweise mit Waser, dann Schaumreinigen und dann Spülen, vorzugsweise mit Wasser, des umlaufenden Förderelements (18) auf;
das Reinigen weist ein aufeinanderfolgendes, selektives Reinigen unterschiedlicher Abschnitte des umlaufenden Förderelements (18) mittels selektiv zuschaltbarer Reinigungsabschnitte (30, 32, 34) der Reinigungseinrichtung (26) auf;
das Reinigen weist ein Reinigen einer Verschmutzung des umlaufendenden Förderelements (18), deren Position zuvor von der Sensoreinrichtung (24) erfasst wurde, mittels eines selektiv zugeschalteten Reinigungsabschnitts (30, 32, 34) von mehreren selektiv zuschaltbaren Reinigungsabschnitten (30, 32, 34) der Reinigungseinrichtung (26) auf;
das Reinigen weist selektives Zuschalten von mehreren selektiv zuschaltbaren Reinigungsabschnitten (30, 32, 34) der Reinigungseinrichtung (26) derart auf, dass das umlaufende Förderelement (18) nur in von Behältern (12) freien Abschnitten des umlaufenden Förderelements (18) gereinigt wird; und
das Ausgeben der Aufforderung zum Reinigen und/oder das Reinigen des umlaufenden Förderelements (18) erfolgt, wenn nach mehrmaligen Schmieren einer Behälterkontaktseite des umlaufenden Förderelements (18) der erfasste Reibkennwert des umlaufenden Förderelements (18) im Wesentlichen unverändert ist oder sich vergrößert hat.
